# EUROPÄISCHE PATENTANMELDUNG

(11) **EP 1 338 463 A2**
(43) Veröffentlichungstag der Anmeldung: **27.08.2003**
(21) Anmeldenummer: 03001832.9
(22) Anmeldetag: 29.01.2003
(51) Int. Cl.: B60N 2/30

(54) **Klappsitz für Nutzfahrzeuge**

(30) Priorität: 22.02.2002 DE 10207485
(71) Anmelder: DaimlerChrysler AG, 70567 Stuttgart (DE)
(72) Erfinder: Konzmann, Rainer, 72119 Ammerbuch (DE); Zygan, Andreas, 76316 Malsch (DE)

(57) **Zusammenfassung**

Die Erfindung betrifft einen Klappsitz (1) für Nutzfahrzeuge, der über eine Konsole (4) fest mit dem Fahrzeug verbunden ist und eine schwenkbare Rückenlehne (2) sowie ein schwenkbares Sitzkissen (3) aufweist. Um eine gute Raumausnutzung zu gewährleisten, weist die Konsole (4) ein Staufach (43) zur Aufnahme von Gegenständen auf. Das Staufach (43) wird von dem Sitzkissen (3) in Gebrauchslage verschlossen und ist in dessen Klappstellung zugänglich.

## Beschreibung

Die Erfindung betrifft einen Klappsitz nach dem Oberbegriff des Anspruchs 1.

Klappsitze werden in der Praxis in Nutzfahrzeugen als raumsparende Sitze eingesetzt. Aus der DE 41 35 841 A1 ist ein Klappsitzelement bekannt, das zwischen einer Gebrauchslage und einer platzsparenden Durchgangslage schwenkbar ist. In der Gebrauchslage bietet das Klappsitzelement, einen Sitzplatz und in der Durchgangslage ist eine platzsparende Unterbringung des Klappsitzelementes gewährleistet. So kann das Klappsitzelement z. B. als platzsparender Reservesitz in Durchgängen angeordnet werden.

Es ist Aufgabe der Erfindung, einen Klappsitz zu schaffen, der eine sehr gute Raumausnutzung aufweist und in der Gebrauchslage einen vollwertigen und insbesondere sicheren Sitzplatz bildet.

Die Aufgabe wird erfindungsgemäß mit einem Klappsitz nach den Merkmalen des Anspruchs 1 gelöst.

Der Klappsitz ist über eine fahrzeugfeste Konsole mit dem Fahrzeug verbunden. Die Konsole weist ein Staufach auf, in dem diverse Gegenstände wie z. B. Karten, Atlanten, Handschuhe usw. verstaubar sind. Über die Konsole ist der Klappsitz mit dem Fahrzeug verbunden, vorzugsweise stabil in dem Fahrzeug gehaltert. Im Falle eines Crash können über die Konsole hohe Kräfte aufgenommen und/oder übertragen werden. Zusätzlich weist die Konsole ein Staufach auf, dass die Raumausnutzung des Klappsitzes verbessert, indem der Raum unterhalb des Sitzes ausgenutzt wird. Um im Crashfall die erforderlichen hohen Kräfte aufnehmen zu können weist die Konsole zwingend ein gewisses Mindestmass auf. Jedoch wird die Konsole nicht durchgängig als massives Element ausgebildet, sondern sie weist mehrere einzelne Tragelemente auf, die auftretende Kräfte aufnehmen können. Zwischen den Tragelementen verbleibt Bauraum, der durch das Staufach genutzt wird.

Vorzugsweise ist das Staufach so ausgebildet, dass es nicht über die Dimensionen des Klappsitzes, vorzugsweise über die seitlichen Abmessungen des sich in Klappstellung befindlichen Sitzes hinausgreift. Damit benötigt der erfindungsgemäße Klappsitz nicht mehr Platz als ein herkömmlicher bekannter Klappsitz, bietet jedoch eine bessere Raumausnutzung.

Eine Ausführung der Erfindung sieht vor, dass das Staufach von dem Sitzkissen in Gebrauchsstellung abgedeckt, insbesondere verschlossen wird. So können auch schwere Gebrauchsgegenstände sicher in dem Staufach verwahrt werden. Bei in Klappstellung aufgeklapptem Sitzkissen ist das Staufach zugänglich und es können Gegenstände aus dem Staufach entnommen und/oder in das Staufach eingebracht werden.

Eine Ausführung der Erfindung sieht vor, dass das Staufach eine Schublade aufweist. In der Schublade können Gegenstände komfortabel gelagert werden. Die Schublade kann ausziehbar oder um eine Achse schwenkbar ausgebildet sein. Vorzugsweise weist sie eine Verrastung auf, die die Schublade in im Staufach eingeschobener bzw. eingeschwenkter Position verrastet.

Um ein versehentliches Klappen und eine damit verbundene Einklemmgefahr zu vermeiden, kann das Sitzkissen verrastbar ausgebildet sein. Insbesondere sind die Endstellungen des Sitzkissens, also die Sitzstellung und/oder die Klappstellung des Sitzkissens verriegelbar und/oder verrastbar.

In einer vorteilhaften Ausführung ist vorgesehen, dass die Rückenlehne einen in die Lehne integrierten Sicherheitsgurt, insbesondere Dreipunktgurt aufweist. Dieser bietet bekannterweise eine hohe Sicherheit für den Sitzenden. Durch die in die Rückenlehne integrierte Ausführung ist der Sicherheitsgurt zudem äußerst platzsparend untergebracht und komfortabel zu bedienen.

Für eine optimale Platzausnutzung ist es vorgesehen, die Rückenlehne klappbar auszubilden. Sie kann von einer aufrechten Position, vorzugsweise Sitzpositon in eine abgeklappte Position geklappt werden. Um die notwendige Stabilität sicherzustellen ist vorgesehen, die Rückenlehne in der aufrechten und/oder abgeklappten Position über eine Rastvorrichtung zu verrasten.

Eine Verwendung des erfindungsgemäßen Klappsitzes ist bei Nutzfahrzeugen wie Lastkraftwagen oder Transportern möglich. Jedoch kann der Klappsitz auch bei Fahrzeugen zum Personentransport wie z. B. Omnibusse, Züge usw. verwendet werden.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: einen Klappsitz in Gebrauchsposition, angeordnet in einer Fahrerkabine eines Nutzfahrzeugs,
- **Figur 2:**: eine Seitenansicht eines Klappsitzes in Gebrauchsstellung,
- **Figur 3:**: eine Seitenansicht eines Klappsitzes in Klappstellung und
- **Figur 4:**: eine Frontansicht eines Klappsitzes in Gebrauchsstellung.

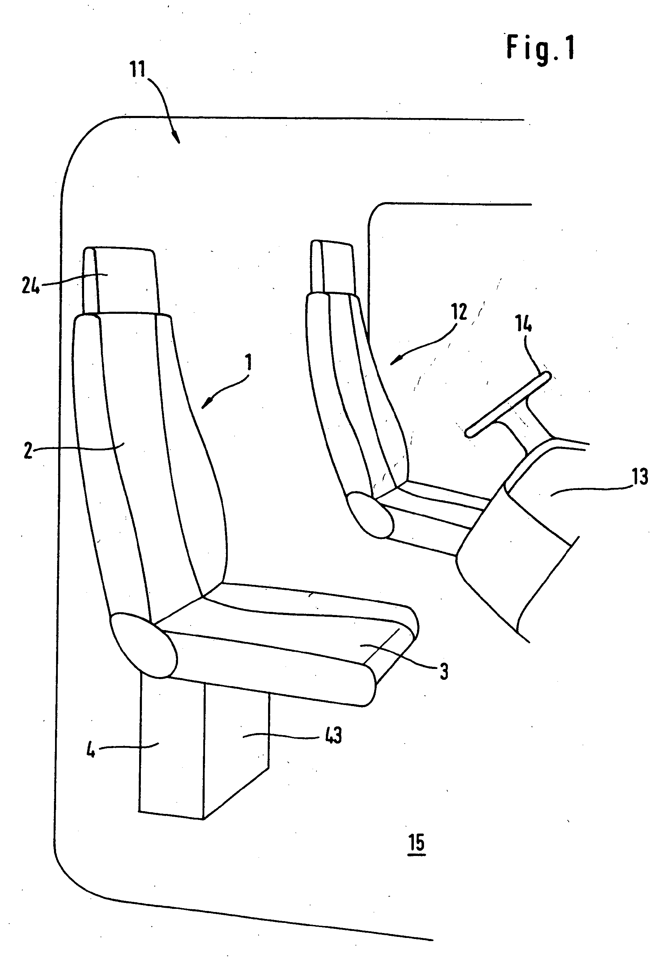

In **Figur 1** ist ein Klappsitz 1 gezeigt, der in einem Fahrerhaus 11 eines Nutzfahrzeuges angeordnet ist. Das Fahrerhaus 11 weist einen Fahrersitz 12 und mehrere an einer Instrumententafel 13 gehalterte Bedienelemente wie z. B. Schalter, Gangwählhebel oder Lenkrad 14 auf. Der Klappsitz 1 ist in Fahrtrichtung gesehen neben dem Fahrersitz 12 an der Position des Beifahrersitzes angeordnet. Über eine Konsole 4 mit Staufach 43 ist der Klappsitz 1 fest mit dem Boden 15 der Fahrerkabine 11 verbunden.

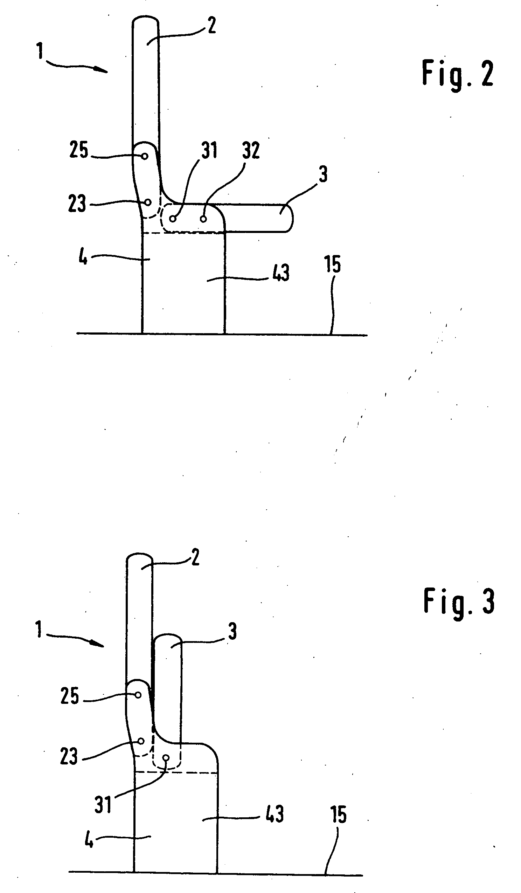

Der Klappsitz 1 weist, wie in der **Figur 2** gezeigt, ein gepolstertes Sitzkissen 3 und eine gepolsterte Rückenlehne 2 auf. Die Konsole 4 haltert das Sitzkissen 3 und die Rückenlehne 2. Sie verbindet diese untereinander und mit dem Boden 15 des Führerhauses 11. Das Sitzkissen 3 ist in der Konsole 4 über eine horizontal verlaufende Drehachse 31 drehbar gelagert. In der in Figur 2 dargestellten Gebrauchsposition ist das Sitzkissen 3 über eine Rastvorrichtung 32 gegen Klappen verrastet. Somit ist die Gebrauchsposition gesichert und kann nicht unbeabsichtigt verstellt werden. Die Rastvorrichtung 32 kann z. B. einen federbelasteten Nocken oder einen Bolzen, der zum Verrasten des Sitzkissens 3 in eine Aussparung der Konsole 4 eingreift.

Auch die Rückenlehne 2 ist um eine horizontal verlaufende Drehachse 23 in der Konsole 4 drehbar gelagert. Eine manuell oder automatisch betätigbare Rastvorrichtung 25 hält die Rückenlehne 2 in der aufrechten Gebrauchsposition. Nach Lösen der Rastvorrichtung 25 kann die Rückenlehne 2 um die Drehachse 23 geschwenkt und in eine nach vorne oder nach hinten geklappte Stellung geschwenkt werden. Dadurch ergibt sich z. B. ein erleichterter Zugang zu dem Stauraum hinter den Sitzen 1, 12.

Nach Lösen der Rastvorrichtung 32 kann das Sitzkissen 3 in die in der **Figur 3** dargestellte Klappstellung geschwenkt werden. In dieser Klappstellung ist ein Durchgang von der Beifahrer zur Fahrerseite einfach und komfortabel möglich. Auch kann der Raum vor dem Klappsitz 1 als Stehplatz oder als zusätzlicher Lagerplatz für zu transportierende Gegenstände genutzt werden.

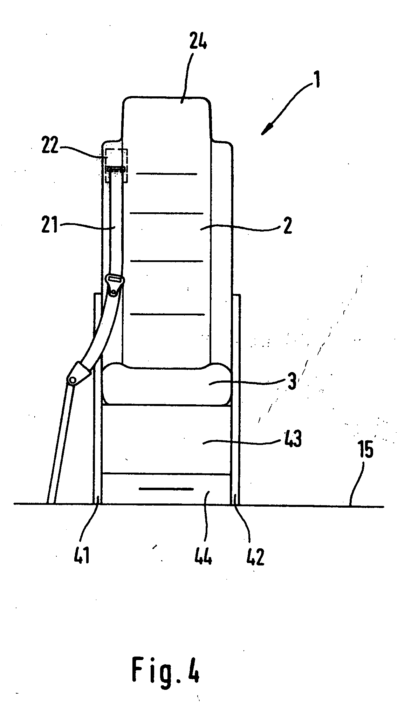

Über die Konsole 4 ist der Klappsitz 1 fest mit dem Fahrzeugboden 15 verbunden. Die Konsole 4 weist, wie in **Figur 4** näher dargestellt, ein Staufach 43 und eine Schublade 44 auf. Das Staufach 43 und die Schublade 44 sind unterhalb des Sitzkissens 3 angeordnet. Zu beiden Seiten der Konsole 4 sind Halter 41, 42 ausgebildet, die das Sitzkissen 3 und die Rückenlehne 2 von beiden Seiten umfassen und haltern. Diese Halter 41, 42 sind entsprechend stabil ausgebildet und nehmen Kräfte, die von der Rückenlehne 2 und/oder dem Sitzkissen 3 ausgehen, auf. Um auch bei einem Crash die Kräfte sicher aufnehmen zu können, sind die Halter 41, 42 entsprechend dimensioniert und aus einem belastbaren Material, wie z. B. Stahl oder Aluminium-Guss ausgebildet.

In dem zwischen den Haltern 41, 42 unter dem Sitzkissen 3 verbleibenden Bauraum ist das Staufach 43 angeordnet. Es ist nach oben hin offen und wird in Gebrauchsstellung des Sitzkissens 3 von diesem abgedeckt und/oder verschlossen. In der Klappstellung des Sitzkissens 3 ist das Staufach 43 von oben zum Einlegen oder Entnehmen von Gegenständen frei zugänglich. So können insbesondere auch größere Gegenstände wie z. B. Getränkeflaschen und/oder Bücher sicher und praktisch in dem Staufach 43 verstaut werden.

Für kleinere Gegenstände und/oder Gegenstände die auch während der Fahrt öfters benötigt werden, weist die Konsole 4 eine Schublade 44 auf. Diese ist in Fahrtrichtung nach vorne hin ausziehbar. Um ein ungewolltes Öffnen der Schublade 44 zu unterbinden, weist diese eine Rastvorrichtung auf, die die Schublade 44 in eingeschobener Stellung verrastet. Die Schublade 44 ist unterhalb des Staufaches 43 angeordnet, und auch bei in die Gebrauchsstellung heruntergeklapptem Sitzkissen 3 gut zugänglich.

Die Rückenlehne 2 des Klappsitzes 1 weist einen integrierten Dreipunkt-Sicherheitsgurt 21 auf. Ein Gurtaufroller 22 ist in der Rückenlehne aufgenommen und verdeckt eingebaut. Beim Klappen der Rückenlehne 2 wird der Dreipunkt-Sicherheitsgurt 21 mit geklappt. Ein Verheddern des Gurtes 21 mit der Lehne 2, wie es bei Kabinenfest montierten Gurten möglich ist, ist somit nicht mehr möglich. Somit bildet der Klappsitz 1 einen komfortablen und zugleich sicheren Sitzplatz.

## Patentansprüche

1. Klappsitz für ein Nutzfahrzeug,
der über eine fahrzeugfeste Konsole in dem Fahrzeug gehaltert ist,
mit einer Rückenlehne und einem zwischen einer Gebrauchsstellung und einer Klappstellung schwenkbarem Sitzkissen, wobei in Klappstellung der Raum vor dem Sitz als Stehplatz oder Durchgang nutzbar ist,
**dadurch gekennzeichnet,**
**dass** die Konsole (4) ein Staufach (43) zur Aufnahme von Gegenständen aufweist und zwei seitlich des Staufachs angeordnete Halter (41, 21) zum Aufnehmen von Kräften bei einem Crash aufweist, die die Rückenlehne (2) und das Sitzkissen (3) haltern.

2. Klappsitz nach Anspruch 1,
**dadurch gekennzeichnet,**
**dass** das Sitzkissen (3) in Gebrauchsstellung das Staufach (43) abdeckt, vorzugsweise verschließt.

3. Klappsitz nach Anspruch 1 oder 2,
**dadurch gekennzeichnet,**
**dass** das Staufach (43) in Klappstellung des Sitzkissens (3) zum Verstauen und/oder Entnehmen von Gegenständen zugänglich ist.

4. Klappsitz nach einem der Ansprüche 1 bis 3,
**dadurch gekennzeichnet,**
**dass** das Sitzkissen (3) in Klappstellung und/oder Gebrauchsstellung verrastbar ist.

5. Klappsitz nach einem der Ansprüche 1 bis 4,
**dadurch gekennzeichnet,**
**dass** das Staufach (43) eine ausziehbare und oder ausschwenkbare Schublade (44) aufweist.

6. Klappsitz nach einem der Ansprüche 1 bis 5,
**dadurch gekennzeichnet,**
**dass** die Rückenlehne (2) einen in die Rückenlehne integrierten Dreipunkt-Sicherheitsgurt (21) aufweist, vorzugsweise dass ein Gurtaufroller (22) in die Rückenlehne (2) integriert ist.

7. Klappsitz nach einem der Ansprüche 1 bis 6,
**dadurch gekennzeichnet,**
**dass** die Rückenlehne (2) als zwischen einer aufrechten und einer abgeklappten Position schwenkbare Rückenlehne (2) ausgebildet ist.

8. Klappsitz nach Anspruch 7,
**dadurch gekennzeichnet,**
**dass** die Rückenlehne (2) in der aufrechten Position und/oder in der abgeklappten Position verrastbar ist.
